# EUROPÄISCHE PATENTSCHRIFT

(11) **EP 1 996 015 B1**
(45) Veröffentlichungstag und Bekanntmachung des Hinweises auf die Patenterteilung: **24.04.2013**
(21) Anmeldenummer: 07711846.1
(22) Anmeldetag: 08.03.2007
(51) Int. Cl.: A01N 25/00, A01P 7/04

(54) **KÖDER AUF INVERTZUCKERSIRUP BASIS**
INVERT SUGAR SYRUP BASED BAIT
APPÂT À BASE DE SIROP DE SUCRE INVERTI

(30) Priorität: 11.03.2006 DE 102006011403
(43) Veröffentlichungstag der Anmeldung: 03.12.2008
(73) Patentinhaber: Bayer CropScience Aktiengesellschaft, 40789 Monheim (DE)
(72) Erfinder: GUTSMANN, Volker, 40764 Langenfeld (DE); BÖCKER, Thomas, 42799 Leichlingen (DE); NENTWIG, Günther, 51381 Leverkusen (DE); MCBEATH, Justin, Woodend, Victoria 3442 (AU); EINAM, Jeffery, Victoria Point, Queensland 4165 (AU)
(86) Internationale Anmeldenummer: PCT/EP2007/001985
(87) Internationale Veröffentlichungsnummer: WO 2007/104461

(56) Entgegenhaltungen:
- EP-A1- 0 084 310
- WO-A1-2005/092092
- US-A1- 2004 057 976
- DATABASE CAB [Online] CAB INTERNATIONAL, WALLINGFORD, OXON, GB; G.M.DLUSSKII: "The house ant" XP002518883 gefunden im STN-INTERNATIONAL Database accession no. 77:29181 & ZASHCHITA RASTENII, Nr. 11, 1976, Seite 58,
- DATABASE CROPU [Online] D.R.SMITLEY ET AL.: "Ant control around housing structures, 1988" XP002518884 gefunden im STN-INTERNATIONAL Database accession no. 2000-84490 & ARTHROPOD MANAGE.TESTS, Bd. 24, 1999, Seiten 387-388,
- DATABASE CAB [Online] CAB INTERNATIONAL, WALLINGFORD, OXON, GB; D.J.T.SUMPTER ET AL.: "From nonlinearity to optimality: pheromone trail foraging by ants" XP002518885 gefunden im STN-INTERNATIONAL Database accession no. 2003:167326 & ANIMAL BEHAVIOUR, Bd. 66, Nr. 2, 2003, Seiten 273-280,
- ANONYM: "Lästige Ameisen vertreiben" PRESSEMELDUNG DER LANDWIRTSCHAFTSKAMMER NORDRHEIN-WESTFALEN, [Online] 18. Mai 2004 (2004-05-18), XP002518882 Gefunden im Internet: URL:http://www.landwirtschaftskammer.de/pr esse/archiv/aa-2004-20-05.htm> [gefunden am 2009-03-10]
- DATABASE CA [Online] CHEMICAL ABSTRACTS SERVICE, COLUMBUS, OHIO, US; R.POSPISCHIL ET AL.: "Efficacy of imidacloprid for cockroach control in a gel bait formulation" XP002518886 gefunden im STN-INTERNATIONAL Database accession no. 133:39440 & PFLANZENSCHUTZ-NACHRICHTEN BAYER, Bd. 52, Nr. 3, 1999, Seiten 386-400,
- DATABASE CA [Online] CHEMICAL ABSTRACTS SERVICE, COLUMBUS, OHIO, US; A.ELBERT ET AL.: "Imidacloprid - a new systemic insecticed" XP002518887 gefunden im STN-INTERNATIONAL Database accession no. 122:25815 & PFLANZENSCHUTZ-NACHRICHTEN BAYER, Bd. 44, Nr. 2, 1991, Seiten 113-136,
- DATABASE CA [Online] CHEMICAL ABSTRACTS SERVICE, COLUMBUS, OHIO, US; XP002518888 gefunden im STN-INTERNATIONAL Database accession no. 132:46276 & JP 2000 001402 A (YUKO CHEMICAL INDUSTRIES) 7. Januar 2000 (2000-01-07)
- DATABASE CA [Online] CHEMICAL ABSTRACTS SERVICE, COLUMBUS, OHIO, US; C.H.POPENOE: "Thallium as an insecticide" XP002518889 gefunden im STN-INTERNATIONAL Database accession no. 21:6395
- DATABASE BIOSIS [Online] BIOSCIENCES INFORMATION SERVICE, PHILADELPHIA, PA, US; 1982, FOWLER H G ET AL: "INSECT GROWTH REGULATORS IN BAITS ACCEPTABILITY TO CARPENTER ANTS CAMPONOTUS-PENNSYLVANICUS HYMENOPTERA FORMICIDAE" XP002518890 Database accession no. PREV198375063628 & ZEITSCHRIFT FUER ANGEWANDTE ENTOMOLOGIE, Bd. 94, Nr. 2, 1982, Seiten 149-152, ISSN: 0044-2240

## Beschreibung

Die vorliegende Erfindung betrifft Ameisenköder auf der Basis von Zuckersirupen, ein Verfahren zur Herstellung dieser Ameisenköder und deren Verwendung.

Es ist bekannt, dass Insektizide bei der Bekämpfung von Ameisen in den verschiedensten Zubereitungsformen eingesetzt werden können. Beispielsweise genannt seien Spritzmittel, Stäube, Sprühdosen und Köder. Da Ameisen häufig im näheren Wohnbereich von Menschen und von Haustieren anzutreffen sind und dort bekämpft werden müssen, gewinnen Köderpräparate sowohl wegen ihrer vergleichsweise geringen Gefährdung von Mensch und Haustier als auch wegen ihrer ganz allgemein hohen Umweltfreundlichkeit zunehmend an Bedeutung. Ferner ermöglichen Köder mit einem langsam wirkenden Insektizid die Eintragung durch die Ameisen ins Nest. Die Verfütterung an weitere Arbeiterinnen, Königin(en) und Larven (Trophallaxie) führet zu einer kompletten Eradikation der Kolonie, was mit anderen Verfahren kaum zu erreichen ist.

Die Zahl der insektiziden Wirkstoffe, die für die Verwendung in einem Ameisenköder in Betracht kommen, ist jedoch sehr gering, da die sehr empfindlich reagierenden Ameisen ihre Annahme meist verweigern. Besonders gilt dies dann, wenn die Köder Wirkstoffe in hohen Konzentrationen enthalten müssen, um eine genügende hohe Wirkung zu erreichen.

Als insektizid und akarizid wirksame Stoffe, die zur Bekämpfung von Ameisen eingesetzt werden können, sind beispielsweise O,O-Diethylthionophosphoryl-α-oximino-phenylessigsäurenitril (Phoxim) und O,O-Diethylthionophosphoryl-α-oximino-(2-chlorphenyl)-essigsäurenitril (Chlorphoxim) schon seit vielen Jahren bekannt (vgl. DE-PS 1 238 902). Diese Substanzen lassen sich in Form von Sprüh- und Stäubemitteln anwenden.

Ferner ist versucht worden, Phoxim in Form einer Köderformulierung zur Bekämpfung von Ameisen einzusetzen (vgl. "Toxicological and Biological Studies of Odorous House Ant, Tapinoma sessile" in Journ, of econ. Ent. Vol. 63, 1971-1973 (1970)). Dabei ergab sich, dass durch Köder, die 0,05 Gew.-% Phoxim im Gemisch mit Brombeersirup oder Brombeermarmelade enthalten, eine vollständige Kontrolle der Ameisen erzielt werden kann. Nachteilig ist aber, dass Köder mit einem so niedrigen Gehalt an Phoxim keine für praktische Zwecke ausreichend lange Lagerstabilität besitzen. Analoge Köder, in denen das Phoxim in einer Konzentration von 0,5 Gew.-% bis 1 Gew.-% vorhanden ist, weisen zwar eine für die Praxis genügende Stabilität und Wirkungsdauer auf, zeigen jedoch eine Repellentwirkung, so dass die Ameisen nicht an diesen Ködern fressen. Der Einsatz von Ködern, die Phoxim enthalten, hat also bisher bei der Ameisenbekämpfung nicht den gewünschten Erfolg erbracht. Letztendlich wirkt Phoxim relativ schnell, so dass die oben beschriebene Trophallaxie nicht oder nur in geringem Maße auftritt.

Aus der EP-A1-0 084 310 sind ferner Ameisenköder bekannt, welche neben Phoxim- bzw. Chlorphoxim auch noch Glycerin und/oder Honig enthalten, welche die vorstehend beschriebenen Nachteile jedoch auch nicht zufrieden stellend lösen.

Eine zusätzliche Schwierigkeit bei der Herstellung von Ködern auf Phoxim- bzw. Chlorphoxim-Basis liegt darin, dass die Wirkstoffe relativ temperaturempfindlich sind. Daher verbietet sich die Durchführung der üblichen Herstellungsmethode, die darin besteht, dass die Komponenten vermengt und erwärmt werden, um so die Viskosität des entsprechenden Gemisches herabzusetzen und es leichter rührbar zu machen.

Darüber hinaus hat sich herausgestellt, dass Ameisen in besonderem Maße flüssige Köder bevorzugen. Die Aufnahme flüssiger Köder ist für die auf die Nahrungssuche und -aufnahme spezialisierte Arbeiterin am einfachsten, und somit bevorzugt. Ein Nachteil flüssiger Köder ist allerdings, dass der Wasseranteil nach Ausbringung durch Verdunstung bis auf Null sinken kann (Austrocknung). Dieses Phänomen wirkt sich nachteilig auf den Verzehr des Köders durch die Ameise aus, bedingt durch die Verfestigung des Köders und auch durch Aufkonzentrierung des enthaltenden Wirkstoffes (Repellier-Effekt). Aus den genannten Gründen sind flüssige Köder zwar zunächst (24 h) sehr attraktiv, sie verlieren aber danach rapide an Wirkung.

Damit besteht weiterhin Bedarf nach Ameisenköder, welche die zuvor beschriebenen Nachteile nicht aufweisen. Insbesondere besteht Bedarf nach Ameisenköder, die gleichzeitig von einer Vielzahl an unterschiedlichen Ameisen gerne gefressen werden, nach Ausbringung über einen genügend langen Zeitraum für die Ameisen attraktiv und damit hochwirksam sowie lagerstabil sind, kostengünstig und einfach herzustellen sind.

Gelöst wird diese Aufgabe durch einen Ameisenkörper, der mindestens einen insektizid wirkenden Wirkstoff und Invertzuckersirup enthält, dadurch gekennzeichnet, dass der Invertzuckersirup einen Trockensubstanzgehalt von 81 % und einen Inversionsgrad von 55 % oder einen Trockensubstanzgehalt von 72,7 % und einen Inversionsgrad von 66 % aufweist.

Erfindungsgemäß wurde herausgefunden, dass Ameisenköder, die neben mindestens einem insektiziden Wirkstoff auch Invertzuckersirup enthalten dadurch gekennzeichnet, dass der Invertzuckersirup einen Trockensubstanzgehalt von 81 % und einen Inversionsgrad von 55 % oder einen Trockensubstanzgehalt von 72,7 % und einen Inversionsgrad von 66 % aufweist zur Bekämpfung von Ameisen hochwirksam sind und gleichzeitig über einen langen Zeitraum für die Ameisen attraktiv bleiben.

In einer ersten Ausführungsform der vorliegenden Erfindung enthält der Ameisenkörper zusätzlich einen Vergällungsstoff, wie beispielsweise Bitrex^{®}.

In einer zweiten Ausführungsform der vorliegenden Erfindung besteht der erfindungsgemäße Ameisenkörper im Wesentlichen aus dem mindestens einen insektizid wirkenden Wirkstoff, Invertzuckersirup und gegebenenfalls dem Vergällungsstoff, dadurch gekennzeichnet, dass der Invertzuckersirup einen Trockensubstanzgehalt von 81 % und einen Inversionsgrad von 55 % oder einen Trockensubstanzgehalt von 72,7 % und einen Inversionsgrad von 66 % aufweist.

Der insektizide Wirkstoff, welcher in den erfindungsgemäßen Ameisenködern verwendet wird, unterliegt grundsätzlich keiner Beschränkung, soweit er in der Lage ist, Ameisen abzutöten. Der insektizide Wirkstoff ist daher vorzugsweise ausgewählt aus der Gruppe, bestehend aus
Acetylcholinesterase (AChE) Inhibitoren,
   Carbamate,
      zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
   Organophosphate,
      zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/- ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker
   Pyrethroide,
      zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
   DDT
   Oxadiazine,
      zum Beispiel Indoxacarb
   Semicarbazon,
      zum Beispiel Metaflumizon (BAS3201)
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap
Acetylcholin-Rezeptor-Modulatoren
   Spinosyne,
   zum Beispiel Spinosad
GABA-gesteuerte Chlorid-Kanal-Antagonisten
   Organochlorine,
   zum Beispiel Camphechlor, Chlordane, Endosulfan, Gamma-HCH, HCH, Heptachlor, Lindane, Methoxychlor
   Fiprole,
   zum Beispiel Acetoprole, Ethiprole, Fipronil, Pyrafluprole, Pyriprole, Vaniliprole
Chlorid-Kanal-Aktivatoren
   Mectine,
   zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
   zum Beispiel Chromafenozide, Halofenozide, Methoxyfenozide, Tebufenozide
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
   zum Beispiel Azocyclotin, Cyhexatin, Fenbutatin-oxide
Entkoppler der oxidativen Phoshorylierung durch Unterbrechung des H-Protongradienten
   Pyrrole,
   zum Beispiel Chlorfenapyr
   Dinitrophenole,
   zum Beispiel Binapacyrl, Dinobuton, Dinocap, DNOC
Seite-I-Elektronentransportinhibitoren
   METI's,
   zum Beispiel Fenazaquin, Fenpyroximate, Pyrimidifen, Pyridaben, Tebufenpyrad, Tolfenpyrad
   Hydramethylnon
   Dicofol
Seite-II-Elektronentransportinhibitoren
   Rotenone
Seite-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxin-Analoge,
   zum Beispiel Thiocyclam hydrogen oxalate, Thiosultap-sodium
Agonisten des Ryanodin-Rezeptors,
   Benzoesäuredicarboxamide,
   zum Beispiel Flubendiamid
   Anthranilamide,
   zum Beispiel DPX E2Y45 (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Milbenwachstumsinhibitoren,
   zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Neben einzelnen Wirkstoffen können auch Kombinationen von 2 oder mehr Wirkstoffen eingesetzt werden.

Daneben ist eine Kombination mit Synergisten, z.B Piperonylbutoxid, MGK 264 (Octacide) oder Sesamex möglich.

Ferner können Lockstoffe wie Sexualpheromone, Aggregationspheromone und Aromastoffe (künstlich, naturidentisch oder natürlich) eingesetzt werden.

Unter den insektiziden Wirkstoffen sind Vertreter der Chloronicotinyle und der Fiprole besonders bevorzugt. Ganz besonders bevorzugt als insektizide Wirkstoffe sind im Rahmen der vorliegenden Erfindung Imidacloprid (1-(6-C hlor-3-pyridinylmethyl)-N-nitroimidazolidin-2-ylidenamin) und Fipronil (5-Amino-1-[2,6-dichlor- 4-(trifluoromethyl)phenyl]-4-[(trifluoromethyl)sulfinyl]-1H-pyrazol-3-carbonitril).

Der Gehalt an insektizidem Wirkstoff in dem erfindungsgemäßen Ameisenkörper ist abhängig von der Art des Wirkstoffes und kann daher in großen Bereichen variieren. Im Allgemeinen wird soviel insektizider Wirkstoff verwendet, wie erforderlich ist, um Ameisen abzutöten. Insbesondere hinsichtlich Imidacloprid hat es sich als vorteilhaft herausgestellt, wenn der Gehalt an Imidacloprid 0,001 bis 0,5 Gew.-%, besonders bevorzugt 0,001 bis 0,3 Gew.-%, insbesondere 0,001 bis 0,1 Gew.-%, jeweils bezogen auf den Ameisenköder, beträgt.

Die Invertzuckersirupe sind die Grundinvertsirupe INVERTIX^{®} 72,7/66 und INVERTIX^{®} 81/55, welche insbesondere von den meisten Ameisenarten bevorzugt wird. In diesem Zusammenhang ist es im Rahmen der vorliegenden Erfindung besonders interessant, dass Monomorium pharaonis (Pharaoameise) diese Invertzuckersirupe sehr gut annimmt, da man bei dieser Art im Allgemeinen von Proteinpräferenz ausgeht.

Die Herstellung der erfindungsgemäßen Ameisenköder unterliegt im Rahmen der vorliegenden Erfindung keiner besonderen Beschränkung. Die Herstellung erfolgt dergestalt, dass Imidacloprid, gegebenenfalls unter Zusatz der erfindungsgemäß vorgesehenen Menge an Vergällungsstoff, gegebenenfalls der erfindungsgemäßen Synergisten und/oder der gegebenenfalls erfindungsgemäß vorgesehenen Lockstoffe, in den Invertzuckersirup eingerührt wird.

Die erfindungsgemäßen Ameisenköder weisen den Vorteil auf, dass sie von einer Vielzahl an unterschiedlichen Ameisen gefressen werden. Gleichzeitig sind die erfindungsgemäßen Ameisenköder nach dessen Ausbringung über einen langen Zeitraum stabil, was in den Ausführungsbeispielen exemplarisch belegt ist. Gleichzeitig ist ihre Herstellung einfach und kostengünstig.

Die erfindungsgemäßen Ködermaterialien können bei der Bekämpfung von Ameisen in allen für derartige Köderformulierungen üblichen Formen ausgebracht werden. Als Beispiele für die verschiedenen Ausbringungsformen seien genannt: Offene Ausbringung der Flüssigkeit aus einer Spritze oder Tube in die Nähe einer Ameisenstrasse oder eines Ameisennestes; versteckte Ausbringung der Flüssigkeit aus einer Spritze oder Tube in Ritze und Spalten in der Nähe einer Ameisenstrasse oder eines Ameisennestes (Mauerspalten, Pflastersteinspalten, Holzspalten, etc) und geschützte Ausbringungen in einer Köderstation. Als Köderstationen werden alle in der Branche üblichen Behältnisse bezeichnet, welche den Anwender vor dem Kontakt mit insektizid-haltigen Produkten schützt, vor der Benutzung hermetisch verschlossen ist und nach der Benutzung für die Ameisen leicht zugänglich ist und durch geeignete Konstruktion das Heraustreten der Formulierung verhindert.

Ebenfalls erfindungsgemäß möglich ist eine offene Ausbringung der Flüssigkeit aus einer Spritze oder Tube in ein Ameisennest.

Mit Hilfe der oben genannten Ausbringungsformen lassen sich Ameisen sowohl im Haushalts- und Hygiene-Bereich als auch in der Landwirtschaft und im Gartenbau an allen Stellen bekämpfen, wo sie unerwünscht sind. Man geht dabei so vor, dass man die erfindungsgemäßen Köder an den von Ameisen befallenen Orten ausbringt.

Der Hygiene-Bereich umfasst insbesondere auch die Schädlingsbekämpfung durch professionelle Schädlingsbekämpfer.

Darüber hinaus betrifft die vorliegende Erfindung die Verwendung von Zuckersirupen in Ameisenködern. Insbesondere betrifft die vorliegende Erfindung die Verwendung von Zuckersirupen in Ameisenköder, die zum Abtöten von Ameisen eingesetzt werden. Hinsichtlich der spezifischen Auswahl an Zuckersirupen gelten die vorstehend gemachten Ausführungen für den Zuckersirup in den erfindungsgemäßen Ameisenködern.

Die vorliegende Erfindung wird anhand der nachfolgenden Beispiele näher erläutert, ist jedoch keinesfalls auf diese Beispiele beschränkt.

### Beispiel 1: Aufnahme unterschiedlicher Ameisensirupe durch verschiedene Ameisenarten

Es werden unterschiedliche Ameisenköder, die sich in der Auswahl des Zuckersirups unterscheiden, zur Aktivitätsermittlung an unterschiedlichen Ameisen verwendet. Die erhaltenen Resultate sind in der nachstehenden Tabelle 1 dargestellt

**Tabelle 1**

| | Lasius niger | | Linepithema humile | | Monomorium pharaonis | | Tapinoma melanocephalum | |
|---|---|---|---|---|---|---|---|---|
| Verbindung | Aufnahme | Prozent | Aufnahme | Prozent | Aufnahme | Prozent | Aufnahme | Prozent |
| Invertix 80/95 PM¹ | 113,5 mg | 13,0% | 48,1 mg | 19,4 % | 154,5 mg | 15,6% | 153,3 mg | 13,4% |
| Invertix 81/55 PM | 126,7 mg | 14,5% | 62,2 mg | 25,1 % | 214,2 mg | 21,6 % | 274,5 mg | 24,1 % |
| Invertix 72.7/66 PM | 459,5 mg | 52,5% | 70,6 mg | 28,3% | 350,6 mg | 35,2 % | 315,2 mg | 27,7% |
| Primatin KS-03¹ | 161,6 mg | 18,5% | 49,8 mg | 20,1 % | 192,8 mg | 19,4% | 274,0 mg | 24,0 % |
| Glucose Syrup 43°¹ | 12,7 mg | 1,5% | 17,6 mg | 7,1 % | 81,4 mg | 8,2% | 123,6 mg | 10,8% |
| Gesamt | 874,0 mg | 100% | 248,3 mg | 100 % | 993,5 mg | 100 % | 1140,6 mg | 100% |

| | | | | | | | | |
|---|---|---|---|---|---|---|---|---|
| ¹(Vergleichsbeispiel, nicht unter den Umfang der Erfindung fallend) | | | | | | | | |

Die in der Tabelle 1 dargelegten Ergebnisse zeigen, dass verschiedene Sirupe von den verschiedenen Ameisenarten unterschiedlich stark gefressen werden. Der erfindungsgemäß verwendete Invertsirup 72,7/66 wird allerdings von allen Ameisenarten bevorzugt. Besonders interessant ist auch die Tatsache, dass Monomorium pharaonis (Pharao-Ameise) diesen Sirup sehr gut annimmt, da man bei dieser Art im Allgemeinen von einer Proteinpräferenz ausgegangen wird.

Auch der erfindungsgemäß verwendete Invertsirup 81/55 wird von allen Ameisenarten gut angenommen.

### Versuch 2: Attraktivität der erfindungsgemäßen Ameisenköder nach Ausbringung

**Tabelle 2**

| | Lasius niger | Monomorium pharaonis |
|---|---|---|
| Verbindung | Verbrauch | Verbrauch |
| Invertix 72.7/66 PM frisch | 508,7 mg | 91,5 mg |
| Invertix 72.7/66 PM 2 Wochen alt | 248,5 mg | 136,3 mg |

Die Tabelle 2 zeigt, dass der erfindungsgemäße Invertsirup auch nach 2 Wochen offener Ausbringung noch gut von zwei wichtigen Ameisenarten angenommen wird.

**Tabelle 3**

| | Lasius niger | Linepithema humile |
|---|---|---|
| Verbindung | Verbrauch | Verbrauch |
| Invertix 81/55 PM frisch | 126,7 mg | 62,2 mg |
| Invertix 81/55 PM 1 Wochen alt | 117,7 mg | 78,5 mg |

Die Tabelle 3 zeigt, dass der ebenfalls erfindungsgemäße Invertsirup 81/55 auch nach einer Woche offener Ausbringung noch gut von zwei wichtigen Ameisenarten angenommen wird.
Lasius niger - Schwarze Wegameise
Linepithema humile - Argentinische Ameise
Monomorium pharaonis - Pharaoameise
Tapinoma melanocephalum - Schwarzkopfameise

**Tabelle 4**

| **Feldversuch gegen Pharao-Ameisen** | | |
|---|---|---|
| Invertix 81/55 mit 0.05 % Imidacloprid | | |

| **Tage nach Behandlung** | **Anzahl von Fallen mit Ameisen** | **Anzahl von Ameisen je Falle** |
|---|---|---|
| -15 Tage | 9 | 19 |
| 0 | 12 | 24 |
| 14 Tage | 0 | 0 |
| 36 Tage | 0 | 0 |
| 65 Tage | 0 | 0 |
| 99 Tage | 0 | 0 |

Das Beispiel in Tabelle 4 zeigt, dass der ebenfalls erfindungsgemäße Invertsirup 81/55 auch in Feldversuchen eine rasche und nachhaltige Kontrolle von Ameisen, in diesem Falle Monomorium pharaonis, bewirkt. Ein mit Pharao-Ameisen befallener Wohnblock wurde untersucht. Ameisenfallen wurden ausgelegt, um eine Befallsermittlung durchzuführen. 14 Tage nach der Behandlung wurden keine Ameisen mehr gefangen. Dieser Zustand änderte sich nicht im Beobachtungszeitraum. Der Behandlungserfolg war damit 100%.

## Patentansprüche

1. Ameisenköder, enthaltend mindestens einen insektizid wirkenden Wirkstoff und einem Invertzuckersirup, **dadurch gekennzeichnet, dass** der Invertzuckersirup einen Trockensubstanzgehalt von 81 % und einen Inversionsgrad von 55 % oder einen Trockensubstanzgehalt von 72,7 % und einen Inversionsgrad von 66 % aufweist.

2. Ameisenköder nach Anspruch 1, **dadurch gekennzeichnet, dass** der Ameisenköder zusätzlich mindestens ein Vergällungsmittel enthält.

3. Ameisenköder nach Anspruch 1, **dadurch gekennzeichnet, dass** als insektizid wirkender Wirkstoff Imidacloprid verwendet wird und der Gehalt an Imidacloprid in dem Ameisenköder 0,001 bis 0,5 Gew.-%, bezogen auf den Ameisenköder, beträgt.

4. Verfahren zur Herstellung eines Ameisenköders gemäß Anspruch 1, **dadurch gekennzeichnet, dass** man Imidacloprid, gegebenenfalls unter Zusatz des Vergällungsmittels, mit dem Invertzuckersirup vermischt.

5. Verwendung von Ameisenköder gemäß Anspruch 1 zur Bekämpfung von Ameisen.

## Claims

1. Ant bait, comprising at least one active substance having insecticidal activity and an invert sugar syrup, **characterized in that** the invert sugar syrup has a dry matter content of 81 % and a degree of inversion of 55% or a dry matter content of 72.7% and a degree of inversion of 66%.

2. Ant bait according to Claim 1, **characterized in that** the ant bait additionally contains at least one embittering agent.

3. Ant bait according to Claim 1, **characterized in that** imidacloprid is used as the active substance having insecticidal activity and the content of imidacloprid in the ant bait is 0.001 to 0.5% by weight, based on the ant bait.

4. Process for the production of an ant bait according to Claim 1, **characterized in that** imidacloprid is mixed with the invert sugar syrup, optionally with addition of the embittering agent.

5. Use of ant bait according to Claim 1 for the control of ants.

## Revendications

1. Appât fourmis, contenant au moins une substance active à action insecticide et un sirop de sucre inverti, **caractérisé en ce que** le sirop de sucre inverti présente une teneur en matière sèche de 81 % et un degré d'inversion de 55 % ou une teneur en matière sèche de 72,7 % et un degré d'inversion de 66 %.

2. Appât fourmis selon la revendication 1, **caractérisé en ce que** l'appât fourmis en outre contient au moins un dénaturant.

3. Appât fourmis selon la revendication 1, **caractérisé en ce qu'**on utilise comme substance active à action insecticide l'imidaclopride et la teneur en imidaclopride de l'appât fourmis vaut de 0,001 à 0,5 % en poids, par rapport à l'appât fourmis.

4. Procédé pour la fabrication d'un appât fourmis selon la revendication 1, **caractérisé en ce qu'**on mélange de l'imidaclopride, éventuellement avec addition du dénaturant, avec le sirop de sucre inverti.

5. Utilisation d'un appât fourmis selon la revendication 1 pour la lutte contre les fourmis.
